Europäisches Patentamt

European Patent Office

Office européen des brevets

(11) Veröffentlichungsnummer : **0 094 526**
**B1**

(12) EUROPÄISCHE PATENTSCHRIFT

(45) Veröffentlichungstag der Patentschrift :
30.07.86

(21) Anmeldenummer : 83104057.1

(22) Anmeldetag : 26.04.83

(51) Int. Cl.⁴ : **C 08 F 14/06**, C 08 F   2/20,
C 08 F255/06, C 08 F261/06

(54) Verfahren zur Herstellung von Polymeren und Copolymeren des Vinylchlorids durch Suspensionspolymerisation und Verwendung für den Einsatz als Viskositätserniedriger in der Plastisolverarbeitung.

(30) Priorität : 14.05.82 DE 3218173

(43) Veröffentlichungstag der Anmeldung :
23.11.83 Patentblatt 83/47

(45) Bekanntmachung des Hinweises auf die Patenterteilung : 30.07.86 Patentblatt 86/31

(84) Benannte Vertragsstaaten :
BE CH DE FR GB IT LI NL SE

(56) Entgegenhaltungen :
US-A- 3 978 162
CHEMICAL ABSTRACTS, Band 79, Nr. 10, 10. September 1973, Seite 26, Nr. 54116s, Columbus, Ohio, USA
F. SEVERINI et al.: "Polymerization in aqueous suspension of vinyl chloride in the presence of EPDM elastomers"
Die Akte enthält technische Angaben, die nach dem Eingang der Anmeldung eingereicht wurden und die nicht in dieser Patentschrift enthalten sind.

(73) Patentinhaber : HÜLS AKTIENGESELLSCHAFT
Patentabteilung / PB 15 - Postfach 13 20
D-4370 Marl 1 (DE)

(72) Erfinder : Sielfeld, Gilbert, Dr.
Lipper Weg 197
D-4370 Marl (DE)

**Beschreibung**

Die Erfindung betrifft die Herstellung und Verwendung eines feinkörnigen Vinylchloridsuspensionspolymerisates für den Einsatz als Viskositätserniedriger in der Polyvinylchloridplastisolverarbeitung.

Unter Polyvinylchloridplastisolen (Polyvinylchloridpasten) versteht man im allgemeinen Dispersionen von feinen Polyvinylchloridpulvern in nicht zu stark anquellenden Weichmachern. Als verpastbare Polyvinylchloridtypen eignen sich hierzu Emulsionspolymerisate und insbesondere auch Mikrosuspensionspolymerisate. Es handelt sich hierbei um Polyvinylchloridprodukte, die nach der Polymerisation als Latex anfallen und im allgemeinen durch Sprühtrocknung zu agglomerierten Sekundärteilchen (Plastisoltyp) aufgearbeitet werden. Bei der Plastisolaufbereitung zerfallen diese Agglomerate überwiegend in Primärteilchen. Der Grad dieses Zerfalls und die Größenverteilung der Primärteilchen bestimmen die Fließeigenschaften der Paste.

Polyvinylchloridpasten werden hauptsächlich als Streichpasten, als Tauch- und Gießpasten und als Spritzpasten für die verschiedensten Fertigartikel verwendet.

Im allgemeinen werden für die Herstellung weichmacherarmer Fertigartikel Pasten mit niedrigen Viskositäten gewünscht. Für diesen Zweck ist bekannt, die Pastenviskosität durch Zusatz von nicht verpastbaren feinkörnigen Suspensionspolyvinylchloridprodukten (sogenanntem Extender-PVC), die erst bei Geliertemperatur aufgeschlossen werden, zu erniedrigen.

Gemäß der DE-C-16 45 668 können solche Suspensionspolymerisate zur Erniedrigung der Viskosität von Polyvinylchlorid-Plastisolen mit Hilfe von Methylhydroxypropylcellulosen, die in 2gewichtsprozentiger Lösung eine Viskosität von 50 bis 500 mPa s bei 20 °C aufweisen, als einzigem Suspensionsstabilisator und unter Verwendung von monomerlöslichen Katalysatoren hergestellt werden.

Wie aus dem Vergleichsbeispiel A (gemäß DE-C-16 45 668 mit einer Methylhydroxypropylcellulose als Suspensionsstabilisator, die in 2gewichtsprozentiger Lösung eine Viskosität von 100 mPa s bei 20 °C zeigt) hervorgeht, enthalten so hergestellte Polymerisate jedoch einen erheblichen Anteil grober Körner mit Teilchengrößen über 100 µm. Dieses führt zu einer unerwünschten Sedimentation des Grobanteils und verursacht daher Schwierigkeiten beim Verarbeiten. Ferner führt der Grobanteil zu einer unerwünschten rauhen Oberfläche, insbesondere beim Auftrag sehr dünner Beschichtungen.

Gemäß der DE-A-30 18 940 werden diese Nachteile durch Verwendung eines ganz bestimmten Vinylchlorid-Pfropf-Polymerisats als Extender-Polyvinylchlorid überwunden.

Es handelt sich hierbei um Vinylchlorid-Pfropfpolymere, welche in Gegenwart von öllöslichen Initiatoren, einem Suspensionsstabilisator, einem Emulgator und einem Ethylen-Vinylacetat-Copolymerisat hergestellt werden. Wie aus dem Vergleichsversuch C der DE-A-30 18 940 und dem Vergleichsversuch B der vorliegenden Anmeldung (Tabelle 1) hervorgeht, werden die zum Einsatz als Extender-Polyvinylchlorid in Plastisolen erforderlichen Teilchengrößen durch Zusatz gewisser Emulgator- bzw. Tensidmengen bei der Polymerisation erreicht. Aufgrund der Kornfeinheit neigen solche Produkte nicht zum Absetzen und eignen sich für den Auftrag dünner Plastisolschichten. Diese Maßnahme ist jedoch mit einem gravierenden Nachteil verbunden. Wie aus dem oben erwähnten Vergleichsbeispiel B in Tabelle 1 zu ersehen ist, führt der Zusatz von Tensid zu einer drastischen Erhöhung der Kornporosität und dadurch ist mit diesem Produkt kaum eine Erniedrigung der Pastenviskosität zu erzielen. Um dieser erhöhten Kornporosität entgegenzuwirken, wird gemäß DE-A-30 18 940 in Answesenheit eines Ethylen-Vinylacetat-Copolymers polymerisiert. Um das ohne Emulgator erreichte Pastenviskositätsniveau zu verbessern, werden relativ hohe Mengen an Ethylen-Vinylacetat-Copolymer erforderlich, die zu einer deutlichen Erniedrigung der Gelierfähigkeit der hiermit hergestellten Plastisole und zu einer deutlich höheren Trübung der gelierten Plastisolschichten führen. Wie aus den Vergleichsversuchen C und D gemäß der DE-A-30 18 940 zu ersehen ist, führt eine geringe Menge Ethylen-Vinylacetat-Copolymer kaum zu einer Pastenviskositätserniedrigung.

In der US-A-3 978 162 wird zwar ein Suspensionspolymerisationsverfahren für Vinylchlorid in Gegenwart von Ethylen-Propylen-Ethylidennorbornen Terpolymeren beschrieben, demgemäß das Suspensionsmittel dem Polymersitationsansatz als letzte Reaktionskomponente zuzugeben ist ; aber im Unterschied zum vorliegenden Verfahren werden vergleichsweise große Mengen an Ethylen-Propylen-Ethylidennorbornen-Terpolymeren zugegeben, und zwar 10 bis 60 Gew.% gemäß claim 1 und 25 Gew.% gemäß den Beispielen. Hinzu kommt, daß nach US-A-3 978 162 zwingend in Gegenwart eines aliphatischen Alkohols mit wenigstens 8 Kohlenstoffatomen gearbeitet werden muß. Ein nach US-A-3 978 162 hergestelltes Produkt zeigt ein sehr grobes Korn und keine viskositätserniedrigende Wirkung in Abmischung mit verpastbarem Polyvinylchlorid.

Diese Nachteile wurden überwunden durch ein Verfahren zur Herstellung feinteiliger Polyvinylchloridpolymerisate in Abwesenheit eines Emulgators oder Tensids, wie es durch die Patentansprüche gekennzeichnet ist.

Erfindungsgemäß werden der Katalysator, die erfindungsgemäß einzusetzenden Polymeren und das Monomere bzw. Monomergemisch dem suspensionsstabilisatorfreien Suspensionswasser unter Rühren zugegeben, gegebenenfalls in Anwesenheit von pH-Puffersystemen. Anschließend wird vorzugsweise eine Zeitlang gerührt, z. B. 10 bis 60 Minuten. Zur Stabilisierung des Polymerisationsansatzes wird anschließend der Suspensionsstabilisator, zweckmäßigerweise in Form einer wäßrigen Lösung, mit einem Überdruck zugeführt. Die Suspensionsstabilisatoren können zweckmäßigerweise in einer 1- bis 3gewichtsprozentigen wäßrigen Lösung mit einer Zufuhrgeschwindigkeit von 10 Gewichtsprozent/Minute bis 1 Gewichtsprozent/Minute der einzusetzenden Suspensionsstabilisatorkonzentration zugegeben werden. Die Zugabe des Suspensionsstabilisators erfolgt vor Beginn der Polymerisation. Es wird in Abwesenheit von Emulgatoren polymerisiert.

Als erfindungsgemäß einzusetzende Polymere eignen sich Polyvinylisobutylester mit K-Werten von 80 bis 150, vorzugsweise 90 bzw. 135, gemessen an 0,5 %igen Lösungen in Isooctan bei 20 °C und/oder Ethylen-Propylen-Ethylidennorbornen-Terpolymeren mit 40 bis 50 Gewichtsprozent, vorzugsweise 43 bis 47 Gewichtsprozent Propylengehalt, mit 5 bis 15, vorzugsweise 6 bis 14 Doppelbindungen pro 1 000 C-Atome und mit Viskositäten von 4 bis 20 mPa s, vorzugsweise 5,0 bis 18 mPa s, gemessen an 2 %igen Lösungen in Trichlorethylen bei 25 °C. Eine Mischung der erfindungsgemäß eizusetzenden Polymeren mit Ethylen-Vinylacetat-Copolymeren, die aus 38 bis 55 Gewichtsprozent, vorzugsweise 42 bis 48 Gewichtsprozent Vinylacetat bestehen und eine Viskositätszahl von 95 bis 210 ml/g, vorzugsweise 110 bis 160 ml/g, gemessen in Toluol in einer Konzentration von 0,005 g/cm$^3$ bei 25 °C aufweisen, ist möglich. Die Polymeren und dessen Mischungen werden in Mengen von 0,4 bis 5 Gewichtsprozent, vorzugsweise 0,6 bis 3 Gewichtsprozent, bezogen auf das Monomere oder Monomergemisch, eingesetzt.

Brauchbare Katalysatoren sind die in der Suspensionspolymerisation von Vinylchlorid üblicherweise einzusetzenden Katalysatoren, wie Diacylperoxide, Peroxidicarbonate, Alkylperester oder Azoverbindungen, z. B. Diacetyl-, Didecanoyl-, Acetylbenzoyl-, Dilauroyl-, Dibenzoyl-, Di-tert.-butyl-peroxid, Azodiisobutyronitril, u. a. Aus sicherheitstechnischen Gründen eignen sich besonders die bei Raumtemperatur festen und lagerstabilen Initiatoren. Beispiele geeigneter lagerstabiler Katalysatoren sind Lauroylperoxid, Bis-(4-t-butylcyclohexyl)-peroxidicarbonat, Dimyristyl-peroxidicarbonat, Dicetylperoxidicarbonat, Bis-(2-methylbenzoyl)-peroxid. Die Katalysatoren können allein oder in Mischung eingesetzt werden, wobei man üblicherweise Mengen von 0,01 bis 0,3 Gewichtsprozent, vorzugsweise 0,01 bis 0,2 Gewichtsprozent, bezogen auf das Monomere, anwendet.

Als Suspensionsstabilisatoren eignen sich die bekannten und üblicherweise eingesetzten Verbindungstypen, wie Polyvinylacetat, teilweise hydrolysiertes Polyvinylacetat (Polyvinylalkohol), Celluloseether, wie sie z. B. in der Monographie Kainer, Polyvinylchlorid und Vinylchlorid-Mischpolymerisate, Springer-Verlag, Berlin/Heidelberg/New York (1965), Seite 16 ff., beschrieben sind. Vorzugsweise geeignet sind die im Handel befindlichen Methylcellulosen mit Methoxylsubstitutionsgraden von 22 bis 34 % und Viskositäten von 10 bis 5 000 mPa s, vorzugsweise 10 bis 100 mPa s, gemessen in 2gewichtsprozentiger wäßriger Lösung (gemessen nach Brookfield bei 20 °C und 20 Upm) und/oder Methylhydroxipropylcellulosen mit Methoxylsubstitutionsgraden von 20 bis 32 % und Hydroxi-Propoxyl-Substitutionsgraden von 2 bis 9 % und Viskositäten von 25 bis 5 000, vorzugsweise 40 bis 120 mPa s, gemessen in einer 2gewichtsprozentigen wäßrigen Lösung (Ubbelohde-Kapillarviskosimeter) bei 20 °C.

Sie werden üblicherweise in Mengen von 0,05 bis 1,5 Gewichtsprozent, vorzugsweise 0,1 bis 1,0 Gewichtsprozent, bezogen auf das Monomere, eingesetzt.

Als weitere Polymerisationshilfsstoffe sind gegebenenfalls pH-Puffersysteme, wie Ammoniumsalze, Ammoniak oder Alkalicarbonate, Kettenregler, wie z. B. aliphatische Aldehyde, Trichlorethylen, Hilfsstoffe gegen Wandabscheidungen, Antioxidantien zu verwenden. Die Polymerisation kann bei üblichen Temperaturen zwischen 30 und 80 °C, vorzugsweise 45 bis 75 °C, durchgeführt werden.

Der Einsatz von bis zu 30 Gewichtsprozent mit Vinylchlorid polymerisierbarer Monomerer zur Herstellung von Copolymeren ist möglich. Beispiele brauchbarer Comonomerer sind Vinylester, wie Vinylacetat, Vinylidenhalogenide, wie Vinylidenchlorid, Acrylsäure- und Methacrylsäurealkylester mit 1 bis 18 Kohlenstoffatomen im Alkylrest, wie die Methyl-, n-Butyl- und Laurylester, Ester der Maleinsäure, wie Diethyl-, Dipropylmaleinat und schließlich Monoolefine, wie Ethylen oder Propylen.

Die Aufarbeitung der zusammen mit verpastbaren Polyvinylchlorid-Typen mitzuverwendenden Suspensionspolymerisate wird nach üblichen Verfahren durchgeführt. Die in üblicher Weise entgaste wäßrige Polyvinylchloridsuspension kann zunächst in einer Zentrifuge entwässert, das Produkt gegebenenfalls mit reinem Wasser gewaschen und anschließend einem Stromtrockner zugeführt werden. Gegebenenfalls kann eine weitere Trocknung in einem Trommeltrockner vorgenommen werden.

Die nach den Ansprüchen 1 bis 9 hergestellten Extenderpolymerisate und -copopymerisate können erfindungsgemäß in Mischungen mit 95 bis 45 Gewichtsprozent, vorzugsweise 95 bis 50 Gewichtsprozent, Pastenpolyvinylchlorid als Viskositätserniedriger eingesetzt werden.

Als mit Weichmacher und anderen Zusätzen verpastbare Polyvinylchloridtypen werden die bekannten Emulsions- oder Mikrosuspensionspolymerisate verwendet. Die Herstellung von Emulsions-Polyvinylchlorid ist in der o. a. Monographie von Kainer, Seite 34 ff., beschrieben. Das Mikrosuspension-Polyvinylchlorid wird hergestellt durch Verfahren, wonach das Vinylchlorid, gegebenenfalls zusammen mit anderen Monomeren, vor dem Erwärmen auf die Polymerisationstemperatur in Wasser, das ionogene und gegebenenfalls nichtionogene Emulgatoren enthält, zu einer stabilen Monomerdispersion homogenisiert und die so gewonnene Dispersion in an sich bekannter Weise mit Hilfe von monomerlöslichen Polymerisationskatalysatoren polymerisiert wird. Verfahren, denen diese Arbeitsweise zugrunde liegt, sind z. B. in DE-C-962 834 und DE-C-10 69 387 sowie in GB-A-698 359 beschrieben. Die Herstellung von Polyvinylchloridpasten ist hinreichend bekannt und in der o. a. Monographie von Kainer auf Seite 332 ausführlich beschrieben. Zur weiteren Erläuterung der Erfindung dienen die folgenden Beispiele. Die angegebenen Teile sind Gewichtsteile.

### Beispiel 1

Ein mit Impeller-Rührer und Pfaudler-Stromstörer ausgerüsteter 40 l-Polymerisationskessel aus rostfreiem Stahl wurde mit folgenden Bestandteile beschickt: 15 500 Teile Wasser, 10 Teile Natriumcarbonat, 3,4 Teile Dicetylperoxidicarbonat, 6 Teile Dilauroylperoxid und 100 Teile eines Ethylen/Propylen/Ethylidennorbornen-Terpolymeren mit einem Propylengehalt von 45 Gewichtsprozent, 13 Doppelbindungen auf 1 000 C-Atome und einer Viskosität von 10 mPa s, gemessen an einer 2 %igen Lösung in Trichlorethylen bei 25 °C. Der Kessel wurde geschlossen, mit Stickstoff gespült, evakuiert, anschließend mit 11 200 Teilen Vinylchlorid beschickt und eine Stunde bei Raumtemperatur gerührt. Danach wurden 60 Teile einer in 3 000 Teilen Wasser gelösten Methylcellulose mit einer Viskosität von 60 mPa s, gemessen nach Brookfield (2gewichtsprozentige wäßrige Lösung bein 20 °C und 20 Upm) und einem Methoxylsubstitutionsgrad von 28 % mit einer Zulaufgeschwindigkeit von 0,66 Teilen Methylcellulose pro Minute (50 Teile Lösung pro Minute) eingegeben. Der Kessel wurde auf 60 °C aufgeheizt und bis zu einem Enddruck von 5 bar polymerisiert. Das Produkt wurde nach Entgasung vom größten Teil des Wassers getrennt, mit Wasser gespült und bei 50 °C in einem Wirbelbetttrockner getrocknet. Wie aus Tabelle 1 zu entnehmen ist, besitzt das so hergestellte Produkt ein sehr feines Korn und eine Ausgeprägte viskositätserniedrigende Wirkung in Abmischung mit verpastbarem Polyvinylchlorid.

### Beispiel 2

Es wurde wie in Beispiel 1 verfahren, jedoch wurden anstelle der 60 Teile Methylcellulose 60 Teile einer Methylhydroxipropylcellulose mit einem Methoxylgehalt von 22,1 Gewichtsprozent, einem Hydroxi-Propoxyl-Substitutionsgrad von 8,1 Gewichtsprozent und einer Viskosität von 100 mPa s (gemessen mit einem Ubbelohde-Kapillarviskosimeter an 2gewichtsprozentiger Lösung bei 20 °C) eingesetzt. Wie aus der Tabelle 1 zu entnehmen ist, weist das so hergestellte Produkt ein sehr feines Korn und eine ausgezeichnete viskositätserniedrigende Wirkung in Abmischung mit verpastbarem Polyvinylchlorid auf.

### Beispiel 3

Es wurde wie in Beispiel 1 verfahren, jedoch wurden anstelle der 100 Teile Ethylen/Propylen/Ethylidennorbornen-Terpolymeren mit 13 Doppelbindungen pro 1 000 C-Atome 100 Teile eines Ethylen/Propylen/Ethylidennorbornen mit 7 Doppelbindungen pro 1 000 C-Atome und einer Viskosität von 6,6 mPa s, gemessen an einer 2 %igen Lösung in Trichlorethylen bei 25 °C, eingesetzt. Wie aus der Tabelle 1 zu entnehmen ist, weist das so hergestellte Produkt ein sehr feines Korn und eine ausgezeichnete viskositätserniedrigende Wirkung in Abmischung mit verpastbarem Polyvinylchlorid auf.

### Beispiel 4

Es wurde wie in Beispiel 2 verfahren, jedoch anstelle der 100 Teile Ethylen/Propylen/Ethylidennorbornen-Terpolymeren nur 50 Teile eingesetzt. Wie aus der Tabelle 1 zu entnehmen ist, weist auch hier das Produkt ein sehr feines Korn und eine ausgeprägte viskositätserniedrigende Wirkung in Abmischung mit verpastbarem Polyvinylchlorid auf.

### Beispiel 5

Es wurde wie in Beispiel 2 verfahren, jedoch wurden anstelle des Ethylen/Propylen/Ethylidennorborn en-Terpolymeren 100 Teile eines Polyvinylisobutylethers mit einem K-Wert von 130, gemessen an einer 0,5 %igen Lösung in Isooctan bei 20 °C, eingesetzt. Wie aus der Tabelle 1 zu entnehmen ist, wird auch hier ein sehr feines Produkt mit ausgeprägter viskositätserniedrigender Eigenschaft in Abmischung mit verpastbarem Polyvinylchlorid erzielt.

### Beispiel 6

Es wurde wie in Beispiel 1 verfahren, jedoch wurde ein Polyvinylisobutylether mit einem K-Wert von 130, gemessen an einer 0,5 %igen Lösung in Isooctan bei 20 °C, eingesetzt. Wie aus der Tabelle 1 zu entnehmen ist, weist das so hergestellte Produkt ein sehr feines Korn auf und besitzt eine ausgeprägte viskositätserniedrigende Eigenschaft in Abmischung mit verpastbarem Polyvinylchlorid.

### Beispiel 7

Es wurde wie in Beispiel 6 verfahren, jedoch wurden 100 Teile eines Polyvinylisobutylethers mit K-Wert 100, gemessen an einer 0,5 %igen Lösung in Isooctan bei 20 °C, eingesetzt. Wie aus der Tabelle 1 zu

**0 094 526**

entnehmen ist, weist auch hier das Produkt ein feines Korn auf und besitzt eine ausgeprägte viskositätserniedrigende Wirkung in Abmischung mit verpastbarem Polyvinylchlorid.

Vergleichsbeispiel A (gemäß DE-C-16 45 668)

Ein mit Impeller-Rührer und Pfaudler-Stromstörer ausgerüsteter 40 1-Polymerisationskessel aus rostfreiem Stahl wurde mit folgenden Bestandteilen beschickt : 17 000 Teile Wasser, 10 Teile Natriumcarbonat, 3,4 Teile Dicetylperoxidicarbonat, 6 Teile Dilauroylperoxid und 60 Teile der in Beispiel 2 eingesetzten Methylhydroxipropylcellulose, gelöst jedoch in 1 500 Teilen Wasser. Der Kessel wurde anschließend geschlossen, mit Stickstoff gespült, evakuiert, mit 11 200 Teilen Vinylchlorid beschickt und eine Stunde bei Raumtemperatur gerührt. Danach wurde der Kessel auf 60 °C aufgeheizt und bis zu einem Enddruck von 5 bar polymerisiert. Das Produkt wurde nach Entgasung vom größten Teil des Wassers getrennt, mit reinem Wasser gespült und bei 50 °C in einem Wirbelbetttrockner getrocknet. Wie aus Tabelle 1 zu entnehmen ist, weist das so hergestellte Produkt einen unerwünscht hohen Grobanteil >100 μm auf.

### Beispiel 8

Es wurde wie in Beispiel 2 verfahren, jedoch wurden anstelle der 60 Teile Methylhydroxipropylcellulose mit einer Viskosität von 100 mPa s 80 Teile einer Methylhydroxipropylcellulose mit einem Methoxylsubstitutionsgrad von 28,4 Gewichtsprozent, einem Hydroxi-Propoxyl-Substitutionsgrad von 5 Gewichtsprozent und einer Viskosität von 50 mPa s (gemessen mit einem Ubbelohde-Kapillarviskosimeter an 2gewichtsprozentiger wäßrigen Lösungen bei 20 °C) und anstelle der 100 Teile Ethylen/Propylen/Ethylidennorbornen-Terpolymeren 100 Teile eines Polyvinylisobutylethers mit K-Wert 125, gemessen an einer 0,5 %igen Lösung in Isooctan bei 20 °C, eingesetzt. Wie aus der Tabelle 1 zu entnehmen ist, weist das so hergestellte Produkt ein sehr feines Korn und eine ausgeprägte viskositätserniedrigende Wirkung in Abmischung mit verpastbarem Polyvinylchlorid auf.

### Beispiel 9

Es wurde wie in Beispiel 8 verfahren, jedoch wurden anstelle der 80 Teile Methylhydroxipropylcellulose 60 Teile und anstelle der 100 Teile Polyvinylisobutylether 100 Teile Ethylen/Propylen/Ethylidennorbornen-Terpolymere mit 45 Gewichtsprozent Propylen, mit 7 Doppelbindungen pro 1 000 C-Atome und mit einer Viskosität von 16,2 mPa s, gemessen an 2gewichtsprozentigen Lösungen in Trichlorethylen bei 25 °C, eingesetzt. Wie aus der Tabelle 1 zu entnehmen ist, weist das so hergestellte Produkt ein feines Korn und eine ausgeprägte viskositätserniedrigende Wirkung mit verpastbarem Polyvinylchlorid auf.

### Beispiel 10

Es wurde wie in Beispiel 1 verfahren, jedoch wurden 100 Teile eines Ethylen/Propylen/Ethylidennorbornen-Terpolymeren mit einem Propylengehalt von 45 Gewichtsprozent, mit 13 Doppelbindungen auf 1 000 C-Atome und eine Viskosität von 5,8 mPa s, gemessen an einer 2 %igen Lösung in Trichlorethylen bei 20 °C, eingesetzt. Wie aus der Tabelle 1 zu entnehmen ist, zeigt das so hergestellte Produkt ein feines Korn und eine ausgeprägte viskositätserniedrigende Wirkung in Abmischung mit verpastbarem Polyvinylchlorid auf.

Vergleichsbeispiel B

Es wurde wie in Vergleichsbeispiel A verfahren, jedoch wurden 40 Teile der Methylhydroxipropylcellulose und 2,5 Teile Natriumlaurylsulfat eingesetzt. Wie aus der Tabelle 1 zu entnehmen ist, weist das so hergestellte Produkt ein feines Korn, jedoch eine mangelhafte viskositätserniedrigende Wirkung in Abmischung mit verpastbarem Polyvinylchlorid auf.

Vergleichsbeispiel C (gemäß DE-A-30 18 940)

Es wurde wie in Vergleichsbeispiel B verfahren, jedoch wurden zusätzlich 100 Teile eines Ethylen/Vinylacetat-Copolymeren mit 45 Gewichtsprozent Vinylacetat und mit einem osmotisch gemessenen Molekulargewicht von 39 000 eingesetzt. Wie aus der Tabelle 1 zu ersehen ist, weist das so hergestellte Produkt ein feines Korn auf, bewirkt jedoch eine mangelhafte Erniedrigung der Pastenviskosität in Abmischung mit verpastbarem Polyvinylchlorid.

Vergleichsbeispiel D (gemäß DE-A-30 18 940)

Es wurde wie in Vergleichsbeispiel A verfahren, jedoch wurde zusätzlich 1 Teil des Natriumsalzes eines Paraffinsulfonates mit einer mittleren Kettenlänge von 14 bis 15 C-Atomen eingesetzt. Wie aus der Tabelle 1 zu entnehmen ist, weist das so hergestellte Produkt das gewünschte feine Korn auf, bewirkt jedoch kaum eine Erniedrigung der Pastenviskosität in Abmischung mit verpastbarem Polyvinylchlorid.

5

## Tabelle 1

| | Korngrößenverteilung Siebrückstand in Gew.-% bei folgenden Maschenweiten | | | | Schütt-dichte [1] (g/l) | WM-Aufnahme[2] $\frac{\text{g DOP}}{100 \text{ g PVC}}$ | Pastenviskosität[3] in dPa s bei folgenden den Schergeschwindigkeiten | | | | Reiß-kraft[4] (N/mm²) | Reiß-dehnung (%) |
|---|---|---|---|---|---|---|---|---|---|---|---|---|
| | 40 µm | 63 µm | 100 µm | 160 µm | | | $0,3 \text{ s}^{-1}$ | $1 \text{ s}^{-1}$ | $10 \text{ s}^{-1}$ | $100 \text{ s}^{-1}$ | | |
| Beispiel 1 | 60 | 0,2 | 0,0 | 0,0 | 764 | 4,2 | - | 90 | 82 | 97 | 19,9 | 211 |
| Beispiel 2 | 50 | 0,3 | 0,0 | 0,0 | 748 | 4,3 | 81 | 68 | 67 | 77 | 16,9 | 165 |
| Beispiel 3 | 60 | 0,4 | 0,0 | 0,0 | 700 | 5,6 | 83 | 71 | 75 | 88 | - | - |
| Beispiel 4 | 43 | 0,5 | 0,0 | 0,0 | 752 | 5,1 | 81 | 71 | 77 | 95 | 13,4 | 128 |
| Beispiel 5 | 70 | 1,0 | 0,1 | - | 695 | 5,9 | 103 | 90 | 98 | 116 | 13,4 | 139 |
| Beispiel 6 | 70 | 2,0 | 0,1 | - | 707 | 5,9 | 93 | 85 | 96 | 114 | 13,2 | 139 |
| Beispiel 7 | 72 | 1,5 | 0,1 | 0,0 | 665 | 5,7 | 95 | 85 | 95 | 111 | 11,8 | 114 |
| Vergleichsbeispiel A | 83 | 58 | 5,1 | 0,2 | 574 | 13,8 | 208 | 208 | 223 | - | 11,9 | 112 |
| Beispiel 8 | 35 | 1,0 | 0,0 | 0,0 | 640 | 6,8 | 102 | 99 | 115 | 131 | 21,9 | 243 |
| Beispiel 9 | 50 | 1,2 | 0,1 | 0,0 | 711 | 5,1 | 98 | 78 | 75 | 88 | 13,0 | 129 |
| Beispiel 10 | 63 | 0,2 | - | - | 706 | 5,0 | 74 | 77 | 86 | 104 | 13,0 | 138 |
| Vergleichsbeispiel B | 63 | 2,6 | 0,2 | - | 523 | 13,9 | 687 | 637 | 569 | 494 | 16,2 | 156 |
| Vergleichsbeispiel C | 38 | 0,3 | - | - | 519 | 13,8 | 550 | 571 | 608 | 439 | 20,1 | 207 |
| Vergleichsbeispiel D | 33 | 1,1 | 0,1 | - | 450 | 16,3 | 691 | 706 | 725 | 351 | 18,8 | 191 |

1) nach DIN 53 468

2) nach DIN 53 417/1 (Zentrifugierverfahren)

3) Pastenrezeptur : 50 Gewichtsteile Mikrosuspensions-Polyvinylchlorid
   50 Gewichtsteile erfindungsgemäß hergestelltes Polyvinylchlorid
   38 Gewichtsteile Di-2-Ethylhexylphthalat
   2 Gewichtsteile Ba/Cd/Zn-Stabilisator

Pastenviskosität wurde in einem Rheomat (Fa. Contraves) nach 24 Stunden Lagerzeit gemessen

4) Gelierfähigkeit der Paste (nach Entlüftung) wurde an 1 mm-Preßplatten (Gelierzeit von 1 Minute bei 170 °C) nach DIN 53 455 (Zugversuch) gemessen. Die Reißkraft-Werte und die Reißdehnungs-Werte sind Durchschnittswerte aus 7 Meßwerten.

**Patentansprüche**

1. Verfahren zur Herstellung von Polymeren und Copolymeren des Vinylchlorids durch Suspensionspolymerisation in Gegenwart eines oder mehrerer Suspensionsstabilisatoren, eines oder mehrerer öllöslicher Katalysatoren und gegebenenfalls von pH-Puffersystemen, dadurch gekennzeichnet, daß in Gegenwart von 0,4 bis 5,0 Gewichtsprozent, bezogen auf das Monomere oder Monomerengemisch,

a) eines Ethylen/Propylen/Ethylidennorbornen-Terpolymeren mit einem Propylengehalt von 40 bis 50 Gewichtsprozent, mit 5 bis 15 Doppelbindungen pro 1 000 C-Atome und mit einer Viskosität von 4 bis 20 mPa s, gemessen an 2 %igen Lösungen in Trichlorethylen bei 25 °C, und/oder

b) eines Polyvinylisobutylethers mit einem K-Wert von 80 bis 150, gemessen an 0,5 %igen Lösungen in Isooctan bei 20 °C, polymerisiert wird, und daß die Katalysatoren, das Ethylen/Propylen/Ethylidennorbornen-Terpolymere und/oder der Polyvinylisobutylether und das Monomere bzw. Comonomerengemisch dem Polymerisationsansatz vor dem Suspensionsmittel oder Suspensionsmittelgemisch zugegeben werden.

2. Verfahren nach Anspruch 1, dadurch gekennzeichnet, daß in Gegenwart von 0,6 bis 3,0 Gewichtsprozent Ethylen/Propylen/Ethylidennorbornen-Terpolymere und/oder Polyvinylisobutylether polymerisiert wird.

3. Verfahren nach Anspruch 1 oder 2, dadurch gekennzeichnet, daß beim Lösungsweg a) der Propylengehalt des Ethylen/Propylen/Ethylidennorbornen-Terpolymeren 43 bis 47 Gewichtsprozent beträgt.

4. Verfahren nach Anspruch 1 oder 2, dadurch gekennzeichnet, daß beim Lösungsweg a) die Doppelbindungen pro 1 000 C-Atome 6 bis 14 betragen.

5. Verfahren nach Anspruch 1 oder 2, dadurch gekennzeichnet, daß bei Lösungsweg a) die Viskosität des Ethylen/Propylen/Ethylidennorboren-Terpolymeren 5 bis 18 mPa s, gemessen an 2-gewichtsprozentigen Lösungen in Trichlorethylen bei 25 °C, beträgt.

6. Verfahren nach Anspruch 1 oder 2, dadurch gekennzeichnet, daß beim Lösungsweg b) der K-Wert des Polyvinylisobutylethers 90 bis 135, gemessen an 0,5 %igen Lösungen in Isooctan bei 20 °C, beträgt.

7. Verfahren nach einem der Ansprüche 1 bis 6, dadurch gekennzeichnet, daß das Ethylen/Propylen/Ethylidennorbornen-Terpolymere und/oder der Polyvinylisobutylether in Kombination mit einem Ethylen/Vinylacetat-Copolymeren mit einem Vinylacetatgehalt von 38 bis 55 Gewichtsprozent und einer Viskositätszahl von 95 bis 210 ml/g, gemessen in Toluol in einer Konzentration von 0,005 g/cm³ bei 25 °C, im Gewichtsverhältnis 1 zu 99 bis 99 zu 1 eingesetzt wird.

8. Verfahren nach einem der Ansprüche 1 bis 7, dadurch gekennzeichnet, daß als Suspensionsstabilisatoren 0,1 bis 1,0 Gewichtsprozent einer Methylcellulose mit einem Methoxylsubstitutionsgrad von 22 bis 34 % und einer Viskosität von 10 bis 5 000 mPa s, gemessen in 2gewichtsprozentiger wäßriger Lösung (nach Brookfield bei 20 °C und 20 Upm) und/oder einer Methylhydroxipropylcellulose mit einem Methoxylsubstitutionsgrad von 20 bis 32 % und einem Hydroxi-Propoxyl-Substitutionsgrad von 2 bis 9 % und einer Viskosität von 25 bis 5 000 mPa s, gemessen in einer 2gewichtsprozentigen wäßrigen Lösung (Ubbelohde-Kappilarviskosimeter bei 20 °C) eingesetzt wird.

9. Verwendung des nach einem der Ansprüche 1 bis 8 hergestellten Vinylchloridpolymerisats und -copolymerisats zur Erniedrigung der Viskosität von Dispersionen aus pastenfähigen Vinylchloridpolymerisaten und -copolymerisaten, Weichmachern und gegebenenfalls weiteren Zusatzstoffen.

**Claims**

1. A process for the production of a homopolymer or copolymer of vinyl chloride by suspension polymerisation in the presence of one or more suspension stabilisers, one or more oil-soluble catalysts and optionally a pH buffer system, characterised in that the polymerisation is carried out in the presence of 0.4 to 5 % by weight, based on the monomer(s) or monomer mixture, of

a) an ethylene/propylene/ethylidenenorbornene terpolymer having a propylene content of 40 to 50 % by weight, 5 to 15 double bonds per 100° carbon atoms and a viscosity of 4 to 20 mPa s, measured in a 2 % solution in trichloroethylene at 25 °C, and/or

b) a polyvinylisobutyl ether having a K value of 80 to 150, measured in a 0.5 % solution in isooctane at 20 °C, and in that the catalyst(s), the ethylene/propylene/ethylidenenorbornene terpolymer and/or the polyvinylisobutyl ether, and the monomer(s) or comonomer mixture are added to the polymerisation charge before the suspending agent or suspending agent mixture.

2. A process according to claim 1, characterised in that the polymerisation is carried out in the presence of 0.6 to 3 % by weight of ethylene/propylene/ethylidenenorbornene terpolymer and/or polyvinylisobutyl ether.

3. A process according to claim 1 or 2, characterised in that in alternative a) the propylene content of the ethylene/propylene/ethylidenenorbornene terpolymer is 43 to 47 % by weight.

4. A process according to claim 1 or 2, characterised in that in alternative a) there are 6 to 14 double bonds per 1000 carbon atoms.

5. A process according to claim 1 or 2, characterised in that in alternative a) the viscosity of the ethylene/propylene/ethylidenenorbornene terpolymer is 5 to 18 mPa s, measured in a 2 % by weight solution in trichloroethylene at 25 °C.

6. A process according to claim 1 or 2, characterised in that in alternative b) the K value of the polyvinylisobutyl ether is 90 to 135, measured in a 0.5 % solution in isooctane at 20 °C.

7. A process according to any of claims 1 to 6, characterised in that the ethylene/propylene/ethylidenenorbornene terpolymer and/or the polyvinylisobutyl ether are used in combination with an ethylene/vinyl acetate copolymer having a vinyl acetate content of 38 to 55 % by weight and a viscosity number of 95 to 210 ml/g, measured in toluene at a concentration of 0.005 g/cm$^3$, at a weight ratio of from 1 : 99 to 99 : 1.

8. A process according to any of claims 1 to 7, characterised in that there is used as suspension stabiliser 0.1 to 1 % by weight of a methylcellulose having a degree of methoxy substitution of 22 to 34 % and a viscosity of 10 to 5 000 mPa s, measured in a 2 % by weight aqueous solution (according to · Brookfield at 20 °C and 20 Upm), and/or of a methylhydroxypropyl cellulose having a degree of methoxy substitution of 20 to 32 % and a degree of hydroxypropoxy substitution of 2 to 9 % and a viscosity of 25 to 5 000 mPa s, measured in a 2 % by weight aqueous solution (Ubbelohde capillary viscometer at 20 °C).

9. The use of a vinyl chloride homopolymer or copolymer produced according to any of claims 1 to 8 for lowering the viscosity of a dispersion comprising a paste forming vinyl chloride homopolymer or copolymer, a plasticiser and optionally further additive(s).

## Revendications

1. Procédé pour la préparation de polymères et de copolymères du chlorure de vinyle, par polymérisation en suspension, en présence d'un ou plusieurs stabilisants de suspension, d'un ou plusieurs catalyseurs liposolubles et éventuellement de systèmes tampons du pH, caractérisé par le fait que l'on polymérise en présence de 0,4 à 5,0 % en poids, relativement au monomère ou au mélange de monomères,

a) d'un terpolymère d'éthylène, de propylène et d'éthylidènenorbornène ayant une teneur en propylène de 40 à 50 % en poids, avec 5 à 15 doubles liaisons par 1 000 atomes de carbone et ayant une viscosité de 4 à 20 mPa . s, mesurée sur des solutions à 2 % dans le trichloréthylène à 25 °C, et/ou

b) d'un éther polyvinyl-isobutylique ayant un indice K de 80 à 150, mesuré sur des solutions à 0,5 % dans l'iso-octane à 20 °C, et que l'on ajoute au mélange de polymérisation les catalyseurs, le terpolymère d'éthylène, de propylène et d'éthylidène-norbornène et/ou l'éther polyvinylisobutylique et le monomère ou mélange de comonomères, avant l'agent de suspension ou mélange d'agents de suspension.

2. Procédé selon la revendication 1, caractérisé par le fait que l'on polymérise en présence de 0,6 à 3,0 en poids de terpolymère d'éthylène, de propylène et d'éthylidène-norbornène et/ou d'éther polyvinyl-isobutylique.

3. Procédé selon la revendication 1 ou 2, caractérisé par le fait que, lorsque l'on fait appel à la voie de solution a), la teneur en propylène du terpolymère d'éthylène, de propylène et d'éthylidène-norbornène est de 43 à 47 % en poids.

4. Procédé selon la revendication 1 ou 2, caractérisé par le fait que, lorsqu'on fait appel à la voie de solution a), les doubles liaisons sont de 6 à 14 par 1 000 atomes de carbone.

5. Procédé selon la revendication 1 ou 2, caractérisé par le fait que, lorsqu'on fait appel à la voie de solution a), la viscosité du terpolymère d'éthylène, de propylène et d'éthylidène-norbornène est de 5 à 18 mPa . s, mesurée sur des solutions à 2 % en poids dans le trichloréthylène à 25 °C.

6. Procédé selon la revendication 1 ou 2, caractérisé par le fait que, lorsque l'on fait appel à la voie de solution b), l'indice K de l'éther polyvinyl-isobutylique est de 90 à 135, mesuré sur des solutions à 0,5 % dans l'isooctane à 20 °C.

7. Procédé selon l'une des revendications 1 à 6, caractérisé par le fait que l'on utilise le terpolymère d'éthylène, de propylène et d'éthylidène-norbornène et/ou l'éther polyvinyl-isobutylique en association avec un copolymère d'éthylène et d'acétate de vinyle ayant une teneur en acétate de vinyle de 38 à 55 % en poids et un indice de viscosité de 95 à 210 ml/g, mesurée dans le toluène à une concentration de 0,005 g/cm$^3$ à 25 °C, en un rapport de poids de 1 : 99 à 99 : 1.

8. Procédé selon l'une des revendications 1 à 7, caractérisé par le fait que l'on utilise, comme stabilisant de suspension, de 0,1 à 1,0 % en poids d'une méthyl-cellulose ayant un degré de substitution méthoxyle de 22 à 34 % et une viscosité de 10 à 5 000 mPa . s, mesurée en solution aqueuse à 2 % en poids (selon Brookfield à 20 °C et 20 tours/mn) et/ou d'une méthyl-hydroxypropyl-cellulose ayant un degré de substitution méthoxyle de 20 à 32 % et un degré de substitution hydroxy-propoxyle de 2 à 9 % et une viscosité de 25 à 5 000 mPa . s, mesurée dans une solution aqueuse à 2 % en poids (viscosimètre à capillaire Ubbelohde, à 20 °C).

9. L'utilisation du produit de polymérisation et de copolymérisation du chlorure de vinyle préparé selon l'une des revendications 1 à 8 pour l'abaissement de la viscosité de dispersions formées de produits de polymérisation et de copolymérisation de chlorure de vinyle délayables, de plastifiants et éventuellement d'autres additifs.